# EUROPÄISCHE PATENTSCHRIFT

(11) **EP 2 323 745 B1**
(45) Veröffentlichungstag und Bekanntmachung des Hinweises auf die Patenterteilung: **12.11.2014**
(21) Anmeldenummer: 09780772.1
(22) Anmeldetag: 17.07.2009
(51) Int. Cl.: B01D 29/11, B01D 36/00, F02M 37/22

(54) **MODULEINSATZ ZUM EINBAU IN EINEN FLÜSSIGKEITSFILTER**
MODULE INSERT FOR INSTALLATION IN A LIQUID FILTER
ÉLÉMENT MODULAIRE POUR INCORPORATION DANS UN FILTRE À LIQUIDE

(30) Priorität: 26.07.2008 DE 102008034904
(43) Veröffentlichungstag der Anmeldung: 25.05.2011
(73) Patentinhaber: Mahle International GmbH, 70376 Stuttgart (DE)
(72) Erfinder: BRAUNHEIM, Michael, 73033 Göppingen (DE); GÄNSWEIN, Matthias, 73732 Esslingen (DE); HRODEK, Jörg, A-9125 Mittlern (AT); SIEGLE, Sven, 71364 Winnenden (DE); WLASSA, Richard, 70469 Stuttgart (DE)
(74) Vertreter: BRP Renaud & Partner mbB Rechtsanwälte Patentanwälte Steuerberater
(86) Internationale Anmeldenummer: PCT/EP2009/059228
(87) Internationale Veröffentlichungsnummer: WO 2010/012612

(56) Entgegenhaltungen:
- EP-A2- 1 726 818
- DE-A1-102007 039 661
- DE-U1-202006 019 301

## Beschreibung

Die vorliegende Erfindung betrifft einen Moduleinsatz zum Einbau in einen Flüssigkeitsfilter zur Reinigung des abgeschiedenen Wassers, insbesondere zum Einbau in einen Kraftstofffilter, gemäß dem Oberbegriff des Anspruchs 1.

Aus der WO 01/30478 ist ein Flüssigkeitsfilter bekannt, der einen Funktionsträgereinsatz aufweist. Dieser Funktionsträger ist dazu geeignet, den zu reinigenden Kraftstoff zum Filterelement zu- und abzuleiten und verschiedene weitere Elemente, wie z.B. ein Rücklaufsperrventil, aufzunehmen. Der Funktionsträger sitzt im unteren Teil des Filtergehäuses und wird von ungereinigtem Öl umspült. Das Filtergehäuse wird durch einen Sockel verschlossen, der Öffnungen für die diversen Stutzen des Funktionsträgers aufweist. Zudem besitzt dieser Funktionsträger einen Leerlaufkanal, der beim Wechseln des Filters benötigt wird. Dieser Funktionsträger ist für die Verwendung in Ölfiltern ausgelegt und daher ungeeignet, wenn er bei einem Kraftstofffilter eingesetzt werden soll.

In der US 7,040,299 ist ein Kraftstofffilter gezeigt, bei dem im unteren Teil des Filtergehäuses auf der Schmutzseite ein Schmutzfänger mit integrierter Kraftstoffheizung eingesetzt ist. Das Filtergehäuse weist eine Vielzahl von Zu- und Ableitungen und Verbindungsleitungen auf. Da der Filter auch das im Kraftstoff enthaltene Wasser heraussepariert, ist im Filtergehäuse integriert ein Wasserablass mit Wasserstandsensor vorgesehen. Ein Nachteil dieses Aufbaus ist, dass das abgelassene Wasser nur ungenügend gereinigt wird. Um es so weit zu reinigen, dass es ungefährlich ist, wenn es in die Umgebung abgelassen werden soll, wird ein weiteres z.B. externes Bauteil.

Aus der DE 20 2006 019 301 U1 ist ein Kraftstofffilter bekannt, der ein Behältnis mit sorbierenden Mitteln zur Aufnahme von Verunreinigungen aus dem abgeschiedenen Wasser aufweist.

Aus der EP 1 581 736 und der DE 10 2006 039 581 ist jeweils ein Kraftstofffilter bekannt, bei dem an dem Filtergehäuse ein weiterer Filter zur Reinigung des abgelassenen Wassers angebracht ist.

Auch aus der JP 63224707 ist solch ein Kraftstofffilter bekannt. Ein Nachteil dieses Kraftstofffiltertyps ist allerdings, dass diese relativ großvolumig aufgebaut sind und deshalb bei niedrigen Temperaturen die Gefahr besteht, dass sie einfrieren können, da sehr viel Wasser in dem Sumpf gespeichert wird, bevor es abgelassen und in einer zweiten Reinigungsstufe gereinigt wird. Ein weiterer Nachteil ist auch, dass diese Kraftstofffilter und die Nachreinigung des Wassers nicht für hohe Drücke, wie sie heute üblich sind, ausgelegt sind.

Die Aufgabe der vorliegenden Erfindung ist es, einen bekannten Kraftstofffilter mittels eines Moduleinsatzes zum Einbau dahingehend zu verbessern, dass er insbesondere kompakter aufgebaut ist.

Dieses Problem wird erfindungsgemäß durch die Gegenstände der unabhängigen Ansprüche gelöst. Vorteilhafte Ausführungsformen sind Gegenstand der abhängigen Ansprüche.

Es wird ein Moduleinsatz zum Einbau in einen Flüssigkeitsfilter zur Reinigung des abgeschiedenen Wassers, insbesondere zum Einbau in einen Kraftstofffilter vorgeschlagen, der mindestens einen Wasserstandssensor, mindestens ein Ventil und mindestens einen Strömungskanal für das Wasser, sowie mindestens ein Behältnis mit sorbierenden Mitteln zur Aufnahme von Verunreinigungen aus dem abgeschiedenen Wasser, aufweist, wobei der Moduleinsatz ein druckstabiles Gehäuse aufweist, durch das das Innere des Moduleinsatzes vor dem Druck des Kraftstoffes geschützt wird, und wobei das Behältnis (61) innerhalb des druckstabilen Gehäuses (44) angeordnet ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und wird in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: einen Längsschnitt durch einen erfindungsgemäßen Kraftstofffilter,
- Fig. 2: einen Ausschnitt aus Fig.1,
- Fig. 3: eine Draufsicht auf den Moduleinsatz,
- Fig. 4: eine Seitenansicht mit Schnitt des Moduleinsatzes,
- Fig. 5: einen Schnitt entlang der Linie A-A aus Fig. 3 des Moduleinsatzes.

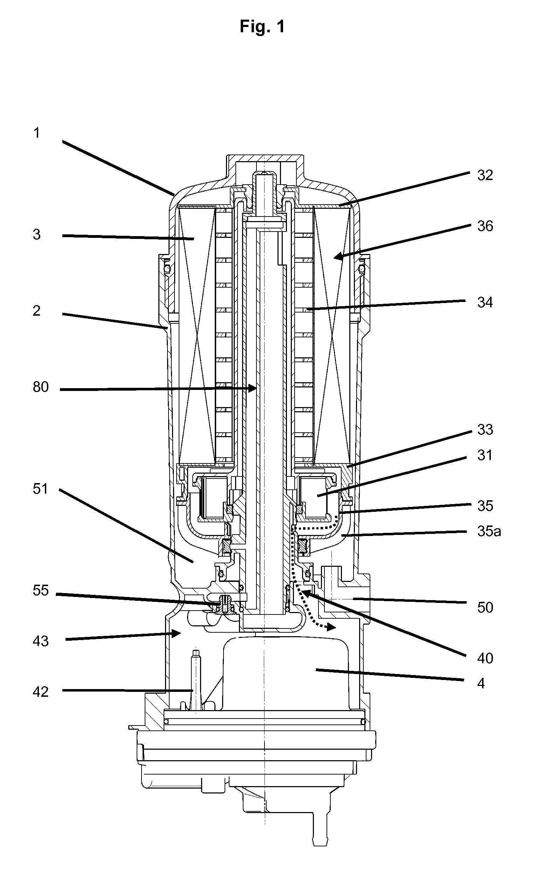

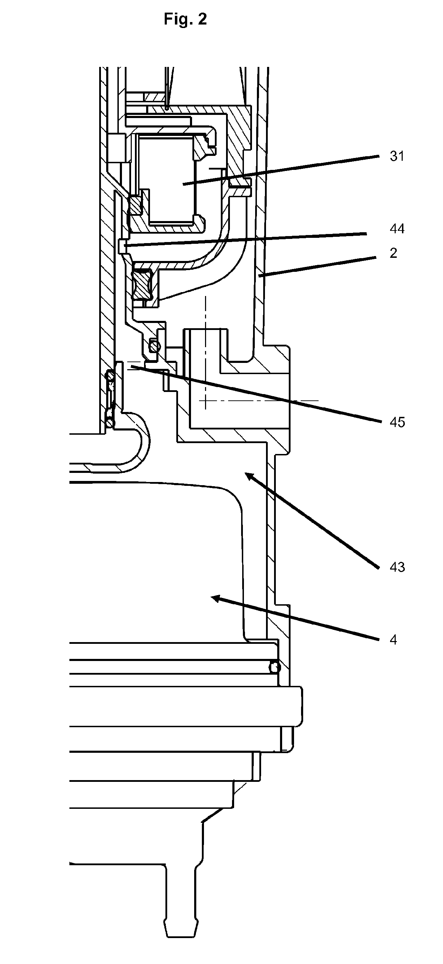

Fig. 1 zeigt einen erfindungsgemäßen Kraftstofffilter im Längsschnitt. Oben wird ein Filtergehäuse 2, das sowohl ein Filterelement 3, als auch einen Moduleinsatz 4 aufnimmt, mit einem Deckel 1 verschlossen. Darunter befindet sich ein Filterraum 51, in dem der Kraftstoff von Schwebeteilchen mittels des Filterelementes 3 gereinigt wird. Eine Vorreinigung für gröbere Teilchen gibt es auch, ist hier aber nicht gezeigt. Der detaillierte Aufbau des Filterelementes 3 ist in den Fig. 2 bis 5 offenbart. Das Filterelement 3 besteht aus einer zylindrischen Innenzarge 34 auf der das Spezialpapier als Filter 36 sitzt, sowie einer oberen 32 und einer unteren Endscheibe 33, einem Boden 35 mit Außenverrippung 35a und einem korbförmigem Sieb 31. Beim Zusammenbau des Kraftstofffilters wird dieses wechselbare Filterelement 3 über den Funktionsträger 80 geschoben, der fest im Filtergehäuse 2 angebracht ist und die Medien Wasser und Kraftstoff leitet.

Das Filterelement 3, enthält als Filter feinporiges Spezialpapier oder andere Materialien, hier kann bereits das im Kraftstoff vorhandene Wasser koaleszieren. Es fliest dann als kleinste Tröpfchen mit dem Kraftstoff mit zu dem Sieb 31. Der Kraftstoff gelangt durch dieses Sieb hindurch auf die Reinseite und verlässt das Kraftstofffilter über den Funktionsträger 80 und entsprechende Auslässe (nicht gezeigt). Das korbförmige Sieb 31 ist aus einem lipophilen Material so gestaltet, dass sich die bereits vorhandenen Wassertröpfchen weiter vergrößern und dann von der Schwerkraft nach unten in einen Wassersammelraum 43 transportiert werden. Je geringer der Schwebstoffanteil im Kraftstoff ist, desto geringer ist auch der Kraftstoffanteil im abgeschiedenen Wasser, daher befindet sich die Wasserabscheidung auf der Reinseite des Filterelementes 3. In den Wassersammelraum 43 ist von unten in das Filtergehäuse 2 der Moduleinsatz 4 eingesetzt und festverschraubt oder anderweitig befestigt.

Der Weg des Wassers ist als Pfeil 40 dargestellt. Mit dem Bezugszeichen 50 ist ein Einlass für den Kraftstoff bezeichnet, von hier aus gelangt er in den Kraftstoffverteilraum 51, durch den hohen Druck von etwa 5-10 bar im Kraftstoffsystem, wird der Kraftstoff durch das Filterelement 3 gedrückt.

Diese hohen Drücke mit Druckspitzen von über 20 bar, liegen auch im Wassersammelraum 43 vor. Da aber das Innere des Moduleinsatzes 4 nicht druckstabil ist, wird es durch ein druckstabiles Gehäuse 44 geschützt. Das Innere des Moduleinsatzes 4 soll druckfrei sein, damit das Wasser druckfrei ablaufen kann. Der Wasserstandsensor 42 im Wassersammelraum 43 sorgt dafür, dass, wenn das Wasser eine vorgegebene Höhe erreicht, es in den Moduleinsatz 4 abgelassen wird. Im Wassersammelraum 43 steht das Wasser einige Zeit, dadurch kann sich der noch vorhandene Kraftstoffanteil über dem stehenden Wasser sammeln. Dieser Kraftstoffanteil wird über die Drossel oder Ventil 55, die sich im Funktionsträger 80 befindet, abgesaugt und fließt dann zurück in den Kraftstofftank.

In Fig. 2 ist ein Ausschnitt aus Fig. 1 zu sehen. Hier ist erkennbar, wie das Wasser vom Sieb 31 über die Öffnungen 44 und 45 in den Wassersammelraum 43 gelangt. Durch die äußere Form des druckstabilen Gehäuses 44, kann im Wassersammelraum 43 der Fluss des Wassers beeinflusst werden, in dem z.B. durch Vorsprünge Beruhigungszonen im Wassersammelraum 43 geschaffen werden (nicht gezeigt).

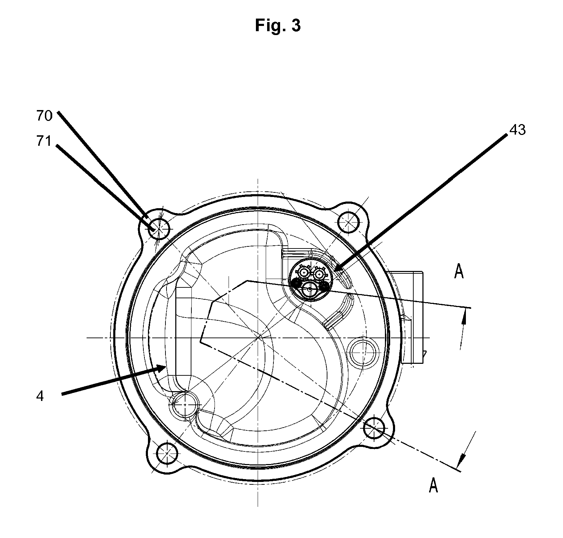

In Fig. 3 ist eine Draufsicht auf den Moduleinsatz 4 zu sehen. Um mindestens einen Wasserstandsensor 42 aufnehmen zu können, weicht das druckstabile Gehäuse 44 von der Kreisform ab. Mittels der Öffnungen 71 in den Ausbuchtungen 70 kann der Moduleinsatz 4 am Filtergehäuse 2 befestigt werden, z.B. mittels Schrauben.

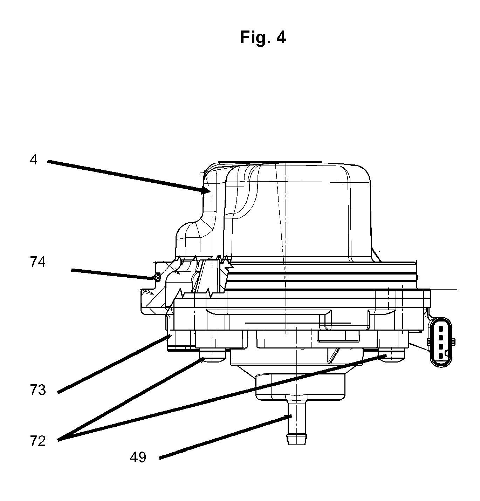

In Fig. 4 ist eine Außenansicht des Moduleinsatzes 4 zu sehen. Er ist mehrteilig aufgebaut, an dem druckstabilen Gehäuse 44 wird ein Boden 73 befestigt, z.B. durch Schrauben 72 oder ähnlichem. Zur Abdichtung zum Filtergehäuse 2 wird eine Dichtung 74 verwendet. Über einen Ablauf 49 wird das gereinigte und nun saubere Wasser in die Umgebung abgelassen.

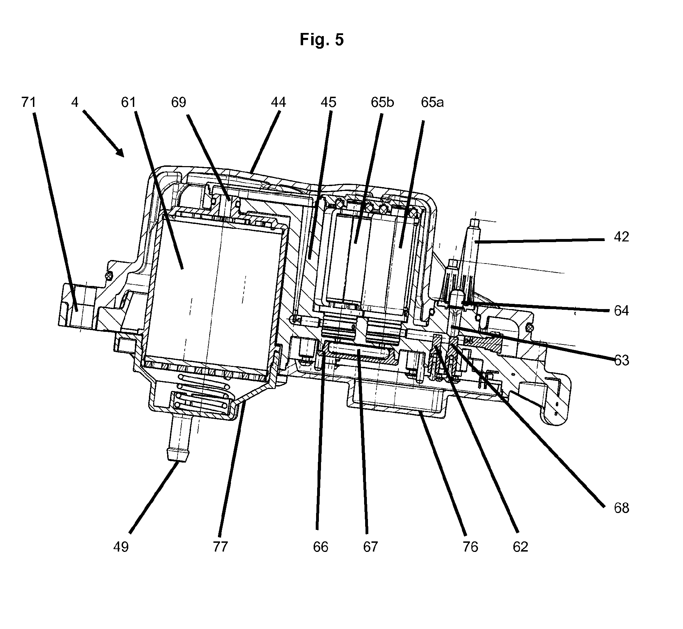

Fig. 5 zeigt das Innere des Moduleinsatzes 4 entlang des Schnittes A-A aus Fig. 3. Das aus dem Kraftstoff abgeschiedene Wasser, das sich im Wassersammelraum 43 gesammelt hat, nimmt folgenden Weg, wenn die Wasserstandssensoren 42, die Ventile 65a und 65b, z.B. Magnetventile, öffnen. Zunächst fließt das Wasser durch ein kleines Sieb 64 in den Strömungskanal 63 in dem sich weitere Sensoren 68 befinden, an den Strömungskanal 63 schließen sich die beiden Ventile 65a und 65b an. Zwischen den Ventilen 65a und 65b liegt im Strömungskanal 66 ein Verdrängerelement 67, der das Einfrieren des Wassers an dieser Stelle verhindern soll, siehe hierzu die DE 10 2007 054 770, die hiermit als incorporated by reference gilt. Über den Strömungskanal 69 gelangt das Wasser schließlich noch in das Behältnis 61, das als Reinigungskartusche ausgebildet ist und daher ausgewechselt werden kann. Im Behältnis 61 können verschiedene Materialien sein, die den verbliebenen Rest an Kraftstoff, der noch im abgelassenen Wasser enthalten ist, sorbieren. Im Behältnis 61 kann als sorbierendes Material sowohl Aktivkohle, als auch ein Kraftstoff aufnehmendes Gewebe, Gewirr, Textilien, Teppich oder ähnliches sein. Sogar das Material des Behältnisses 61 selbst kann aus einem Kunststoff sein, der durch die Aufnahme von Kraftstoff quillt und somit dem abgeschiedenen Wasser den Restkraftstoff entzieht. Ziel ist es, dass das abgeschiedene Wasser nur noch etwa 2 ppm Kraftstoffrest enthält, dieser Anteil wird als ungefährlich für die Umwelt betrachtet.

Der Moduleinsatz 4 setzt sich zusammen aus dem druckstabilen Gehäuse 44 und dem Innenteil 45, in dem die Kanäle 63, 66 und 69 angeordnet sind. Verschlossen wird der Moduleinsatz 4 von unten zum einen mit einem Boden 76 der fest mit dem Innenteil 45 verbunden ist und einem unteren Deckel 77, der es ermöglichen soll, das Behältnis/Reinigungskartusche 61 zu wechseln. Alternativ kann der untere Deckel 77 auch fest z.B. durch Schweißen mit einem Innenteil 45 und dem druckstabilen Gehäuse 44 verbunden werden.

Der wasserführende Strömungskanal 69 und das Behältnis 61 im Moduleinsatz 4, die sich nach den Magnetventilen 65a und 65b befinden, sollten möglichst langsam leer laufen, um die Adsorptionsbedingungen im Behältnis 61 zu verbessern. Optimale Adsorptionsbedingungen herrschen bei einer bestimmten Strömung des abgeschiedenen Wassers durch das Behältnis 61, vorzugsweise strömt es von unten nach oben, alternativ kann es auch wie hier gezeigt von oben nach unter strömen. Die hierzu notwenigen Strömungskanäle 63, 66, 69 werden je nach Bedarf in dem Innenteil 45 vorgesehen.

Der Strömungskanal 69 nach den Magnetventilen 65a/b ist drucklos mit Luftpolster ausgestaltet, diese Volumenreserve dient zur Aufnahme von Volumenänderungen wie z.B. beim Einfrieren. Daher ist auch das druckstabile Gehäuse 44 notwendig, um diesen Bereich vom Druck im Kraftstoff abzuschirmen. Durch die freie Belüftung des Ablaufs 49 nach dem Behältnis 61 mit Aktivkohlefilter kann das Wasser aus diesem Bereich und evtl. nachfolgend angeschlossenen Leitungen ablaufen (nicht gezeigt).

Es kann auch ein Belüftungsventil in dem Strömungskanal 69 vor dem Behältnis 61 vorhanden sein, es dient dazu, dass Luft eindringen kann und dass das Wasser aus dem nachfolgenden Behältnis 61 und weiteren an den Ablauf 49 angeschlossenen Leitungen abläuft. Dieses Belüftungsventil öffnet drucklos oder bei Unterdruck und schließt bei Druck (nicht gezeigt). Die weiteren Sensoren 68 können ein Temperatursensor und eine Heizung zum Auftauen oder Betrieb bei Minusgraden sein, der Einsatz des Temperatursensors 68 und die zugehörige Signalverarbeitung sollen bewirken, dass die Magnetventile 65 bei Minusgraden nicht geöffnet werden.

Der Moduleinsatz 4 weist einen integrierten Aufbau auf, d.h. er enthält die gesamte Leitungsführung für das aus dem Kraftstoff abgeschiedene Wasser durch die im Innenteil 45 integrierten Strömungskanäle 63, 66 und 69. Der Moduleinsatz 4 bietet die Aufnahmegeometrie für die Magnetventile 65, er integriert das Behältnis 61 mit dem Absorber fest oder wechselbar, er hat Anschluss an die Stromversorgung, er leitet Ströme und Signale durch oder bietet Bauraum für Bauteile zur Signalverarbeitung. Des Weiteren nimmt er die Wasserstandssensoren 42 für die Detektion von Wasser auf, die in den Wassersammelraum 43 des Filtergehäuses 2 ragen. Die Magnetventile 65 sind so angeordnet, dass die Magnetventile 65 stromlos geschlossen sind. Die Anordnung der Magnetventile 65 ist so, das zu mindestens bei einem Magnetventil der Kraftstoffdruck das Ventil zudrückt und das Ventil gegen den Kraftstoffdruck öffnen muss.

Der Moduleinsatz 4 ist dreiteilig zum Einbau bzw. Integration in das Kraftstofffiltergehäuse 2 aufgebaut. Der Wassersammelraum 43 wird gebildet durch die Freiräume zwischen Moduleinsatz 4 und Filtergehäuse 2. Ein druckstabiles Gehäuse 44 übernimmt die Aufnahme der Kräfte aufgrund des Kraftstoffdruckes. Das druckfeste Gehäuse 44 kann aus Alu oder schwer entflammbaren Kunststoffen sein und gewährleistet dadurch ausreichend lange die Dichtheit des Kraftstoffsystems, auch bei Fahrzeugbrand.

## Patentansprüche

1. Moduleinsatz (4) zum Einbau in einen Flüssigkeitsfilter zur Reinigung von abgeschiedenem Wasser, insbesondere zum Einbau in einen Kraftstofffilter, der mindestens einen Wasserstandssensor (42), mindestens ein Ventil (65) und mindestens einen Strömungskanal (63, 66, 69) für das Wasser, sowie mindestens ein Behältnis (61) mit sorbierenden Mitteln zur Aufnahme von Verunreinigungen aus dem abgeschiedenen Wasser, aufweist,**dadurch gekennzeichnet,**
- **dass** der Moduleinsatz (4) ein druckstabiles Gehäuse (44) aufweist, durch das ein Inneres des Moduleinsatzes (4) vor dem außen anliegenden Druck des Kraftstoffes geschützt wird,
- **dass** das Behältnis (61) innerhalb des druckstabilen Gehäuses (44) angeordnet ist.

2. Moduleinsatz nach Anspruch 1,**dadurch gekennzeichnet,dass** zumindest in einem der Strömungskanäle (63, 66, 69) ein Verdrängerelement (67) als Einfriersicherung vorgesehen ist.

3. Moduleinsatz nach Anspruch 1 oder 2,**dadurch gekennzeichnet,dass** mindestens zwei Magnetventile (65a, 65b) vorhanden sind.

4. Moduleinsatz nach einem der Ansprüche 1 bis 3,**dadurch gekennzeichnet,dass** das sorbierende Mittel Aktiv-Kohle ist.

5. Moduleinsatz nach einem der Ansprüche 1 bis 3,
**dadurch gekennzeichnet,**
**dass** das sorbierende Mittel ein Gewebe oder ein Gewirr ist, das Kraftstoff speichern kann.

6. Moduleinsatz nach einem der Ansprüche 1 bis 5,
**dadurch gekennzeichnet,**
**dass** das Behältnis (61) eine wechselbare Reinigerkartusche ist, die die sorbierenden Mittel enthält.

7. Moduleinsatz nach einem der Ansprüche 1 oder 6,
**dadurch gekennzeichnet,**
**dass** das Behältnis (61) selbst aus Kunststoff besteht und Kraftstoff speichern kann.

8. Moduleinsatz nach Anspruch 7,
**dadurch gekennzeichnet,**
**dass** im Behältnis (61) weitere sobierende Mittel enthalten sind.

9. Moduleinsatz nach einem der Ansprüche 1 bis 8,
**dadurch gekennzeichnet,**
**dass** das druckstabile Gehäuse (44) aus Aluminium oder aus schwerentflammbarem Kunststoff ausgebildet ist.

10. Moduleinsatz nach einem der Ansprüche 1 bis 9,
**dadurch gekennzeichnet,**
**dass** mindestens zwei Wasserstandsensoren (42) vorhanden sind, die zwei verschiedenen Wasserstandshöhen im Wassersammelraum (43) detektieren können.

11. Moduleinsatz nach einem der Ansprüche 1 bis 10,
**dadurch gekennzeichnet,**
**dass** in den Strömungskanälen (63, 66, 69) Drosseln angeordnet sind.

12. Moduleinsatz nach einem der Ansprüche 1 bis 11,
**dadurch gekennzeichnet,**
**dass** in den Strömungskanälen (63, 66, 69) eine Heizung (62, 68) angeordnet ist, um ein Einfrieren zu verhindern.

13. Kraftstofffilter aufweisend ein Filtergehäuse (2), einen Funktionsträger (80), einen Deckel (1), ein wechselbares Filterelement (3), Zu- und Ableitungen (50) für den Kraftstoff, sowie einen Moduleinsatz (4) zum Einbau in einen Flüssigkeitsfilter zur Reinigung des abgeschiedenen Wassers gemäß einem der vorstehenden Ansprüche.

14. Kraftstofffilter nach Anspruch 13,
**dadurch gekennzeichnet,**
**dass** das Filtergehäuse (2) und der Funktionsträger (80) zusammen die Zu- und Ablaufleitungen zum Filterelement (3) bilden.

## Claims

1. A module insert (4) for installation in a liquid filter for cleaning separated water, in particular for installation in a fuel filter, which comprises at least one water level sensor (42), at least one valve (65) and at least one flow channel (63, 66, 69) for the water, and at least one container (61) having sorbent means for collecting contaminants from the separated water,
**characterized in**
- **that** the module insert (4) has a pressure-resistant housing (44) by means of which an interior of the module insert (4) is protected from the pressure of the fuel,
- **that** the container (61) is arranged in the pressure-resistant housing (44).

2. The module insert according to claim 1,
**characterized in**
**that** at least in one of the flow channels (63, 66, 69) a displacer element (67) is provided as protection against freezing.

3. The module insert according to claim 1 or claim 2,
**characterized in**
**that** at least two solenoid valves (65a, 65b) are present.

4. The module insert according to any one of the claims 1 to 3,
**characterized in**
**that** the sorbent means is activated carbon.

5. The module insert according to any one of the claims 1 to 3,
**characterized in**
**that** the sorbent means is a fabric or a mesh which can store fuel.

6. The module insert according to any one of the claims 1 to 5,
**characterized in**
**that** the container (61) is a replaceable cartridge which contains sorbent means.

7. The module insert according to any one of the claims 1 to 6,
**characterized in**
**that** the container (61) itself is made of plastic and can store fuel.

8. The module insert according to claim 7,
**characterized in**
**that** further sorbent means are contained in the container (61).

9. The module insert according to any one of the claims 1 to 8,
**characterized in**
**that** the pressure-resistant housing (44) is formed from aluminum or flame-resistant plastic.

10. The module insert according to any one of the claims 1 to 9,
**characterized in**
**that** at least two water level sensors (42) are present which can detect two different water levels within the water collection chamber (43).

11. The module insert according to any one of the claims 1 to 10,
**characterized in**
**that** throttles are arranged in the flow channels (63, 66, 69).

12. The module insert according to any one of the claims 1 to 11,
**characterized in**
**that** a heater (62, 68) is arranged in the flow channels (63, 66, 69) for preventing freezing.

13. A fuel filter, comprising a filter housing (2), a functional support (80), a cover (1), a replaceable filter element (3), inlets and outlets (50) for the fuel, and a module insert (4) for installation in a liquid filter for cleaning the separated water according to any one of the preceding claims.

14. The fuel filter according to claim 13,
**characterized in**
**that** the filter housing (2) and the functional support (80) together form the supply and discharge lines to the filter element (3).

## Revendications

1. Module d'insertion (4) à monter dans un filtre à liquide pour purifier l'eau séparée, notamment à monter dans un filtre à carburant, qui présente au moins un capteur de niveau d'eau (42), au moins une soupape (65) et au moins un canal d'écoulement (63, 66, 69) pour l'eau, ainsi qu'au moins un récipient (61) comportant des moyens absorbants pour recevoir les impuretés provenant de l'eau séparée, **caractérisé en ce que**
- le module d'insertion (4) présente un logement (44) stable à la pression, par l'intermédiaire duquel un intérieur du module d'insertion (4) est protégé contre une pression de carburant appliquée de l'extérieur,
- le récipient (61) est disposé à l'intérieur du logement stable à la pression (44).

2. Module d'insertion selon la revendication 1, **caractérisé en ce que** au moins dans un des canaux d'écoulement (63, 66, 69) un élément de refoulement (67) est prévu comme sécurité anti-congélation.

3. Module d'insertion selon la revendication 1 ou 2, **caractérisé en ce que** au moins deux soupapes magnétiques (65a, 65b) sont présentes.

4. Module d'insertion selon une des revendications 1 à 3, **caractérisé en ce que** le moyen absorbant est un charbon actif.

5. Module d'insertion selon une des revendications 1 à 3, **caractérisé en ce que** le moyen absorbant est un tissu ou un entrelacs, qui peut stocker le carburant.

6. Module d'insertion selon une des revendications 1 à 5, **caractérisé en ce que** le récipient (61) est une cartouche nettoyante remplaçable, qui contient des moyens absorbants.

7. Module d'insertion selon une des revendications 1 ou 6, **caractérisé en ce que** le récipient (61) est lui-même constitué de plastique et peut stocker du plastique.

8. Module d'insertion selon la revendication 7, **caractérisé en ce que** des moyens absorbants supplémentaires sont contenus dans le récipient (61).

9. Module d'insertion selon une des revendications 1 à 8, **caractérisé en ce que** le logement stable à la pression (44) est constitué d'aluminium ou de plastique difficilement inflammable.

10. Module d'insertion selon une des revendications 1 à 9, **caractérisé en ce que** au moins deux capteurs de niveau d'eau (42) sont présents, qui peuvent détecter deux hauteurs de niveau d'eau différentes dans l'espace d'accumulation d'eau (43).

11. Module d'insertion selon une des revendications 1 à 10, **caractérisé en ce que** des étranglements sont disposés dans les canaux d'écoulement (63, 66, 69).

12. Module d'insertion selon une des revendications 1 à 11, **caractérisé en ce que** dans les canaux d'écoulement (63, 66, 69) un dispositif de chauffage (62, 68) est disposé, pour empêcher une congélation.

13. Filtre à carburant présente un logement de filtre (2), un support fonctionnel (80), un couvercle (1), un élément de filtre remplaçable (3), des conduites d'amenée et d'évacuation (50) pour le carburant ainsi qu'un module d'insertion (4) à monter dans un filtre à carburant pour purifier l'eau séparée selon une des revendications précédentes.

14. Filtre à carburant selon la revendication 13, **caractérisé en ce que** le logement de filtre (2) et le support fonctionnel (80) forment conjointement les conduites d'amenée et d'évacuation menant à l'élément de filtre (3).
